# EUROPEAN PATENT APPLICATION

(11) **EP 0 573 936 A1**
(43) Date of publication of application: **15.12.1993**
(21) Application number: 93109111.0
(22) Date of filing: 07.06.1993
(51) Int. Cl.: H04N 1/21

(54) **Printhead modulator integrated circuit chip having SRAM addressing circuitry**

(30) Priority: 08.06.1992 US 894890
(71) Applicant: EASTMAN KODAK COMPANY, Rochester, New York 14650-2201 (US)
(72) Inventor: Agar, Keith W., c/o EASTMAN KODAK COMPANY, Rochester, New York 14650-2201 (US); Brown, Gerald M., c/o EASTMAN KODAK COMPANY, Rochester, New York 14650-2201 (US); Caine, Holden Richard, c/o EASTMAN KODAK COMPANY, Rochester, New York 14650-2201 (US); Stoops, James Thomas, c/o EASTMAN KODAK COMPANY, Rochester, New York 14650-2201 (US)
(74) Representative: Wagner, Karl H., Dipl.-Ing.

(57) **Abstract**

A thermal printer has a printhead having a number of data segments each containing a number of thermal elements, and a standard SRAM for storing image data. The SRAM has address space reserved for a line of image data divisible into a number of sections with each location in the address space corresponding to a particular one of the thermal elements in the printhead. A print head modulator chip receives image data and control information, interfaces with the printhead and the SRAM. The chip receives continuous tone image data in parallel digital form and outputs a serialized stream of image density data to the printhead. The chip preprocesses the continuous tone image data and makes available next line data while current line data is being processed by the thermal printhead.

## Description

### Technical Field of the Invention

The present invention relates generally to thermal printing, and, more particularly, to a print head modulator for receiving image data and outputting data to the printhead for printing in an ordered fashion.

### Background of the Invention

A typical print head modulator (PHM) chip serially shifts image data to the thermal printhead in a first data in first data out manner. For some combinations of scanners, printhead shift direction and direction of paper movement under the printhead, this first in first out operation is not desirable; it is desirable to have image data output from the PHM chip in a first data in last data out manner. With present PHM chips, the only way to accomplish a first in last out operation is to reverse the order in which data is fed to the chip. Reversing the order in which data is fed to the chip requires effort and components which make the printer more expensive. Accordingly, it will be appreciated that it would be highly desirable to have a PHM chip that operates with any combination of CCD scanner, front end electronics, thermal printhead and paper movement under the printhead.

Present PHM chips can support thermal printheads that are divided into equal and fixed data segment lengths of 256, 512 or 577. Some thermal printheads available have segment lengths different from the above values. Some printheads have a segment that is different in length than the other segments in the printhead. It is therefore desirable to have a PHM chip that can support these different printhead architectures.

Present PHM chips typically must be loaded with an entire line of the parallel format image data prior to the serial shifting out of this data. Next line data cannot be loaded while the current line data is being printed; so, every line must be loaded into the chip prior to printing out. The time it takes to load the chip with line data is fixed and becomes a larger percentage of line printing time as line printing times are decreased. Accordingly, it will be appreciated that it would be highly desirable to make available next line data while current line data is being printed.

### Summary of Invention

The present invention is directed to overcoming one or more of the problems set forth above. Briefly summarized, according to one aspect of the invention, a thermal printer has a printhead having a number of data segments each containing a number of thermal elements, and a standard SRAM for storing image data. The SRAM has address space reserved for a line of image data divisible into a number of sections with each location in the address space corresponding to a particular one of the thermal elements in the printhead. A print head modulator chip receives image data and control information, and interfaces with the printhead and the SRAM. The chip receives continuous tone image data in parallel digital form and outputs a serialized stream of image density data to the printhead. The chip preprocesses the continuous tone image data and makes available next line data while current line data is being processed by the thermal printhead.

The printhead modulator chip works with a standard SRAM. The chip contains an SRAM addressing scheme including READ segment pointers, WRITE start pointers and an increment/decrement bit that is used with the WRITE pointers. Enough address pointers can be stored in the PHM2 to allow the partitioning of the SRAM address space into storage areas for two lines of image data. The address space of each line can be divided into as many as five data segments of variable length. Ten address pointers are dedicated for READING the SRAM, five pointers for line A address space and five pointers for line B address space. Two address pointers are dedicated for WRITE operations to the SRAM, one for line A and one for line B. There is one bit used to select incrementing or decrementing by one the WRITE address pointer for line A or line B when line data is written to the SRAM. The chip contains storage registers for all the READ and WRITE pointers. Their values can be set to any value within the address range of the SRAM used, up to 15 bits of address space.

The SRAM stores image data for two lines of the complete image at a time. While the data for line A stored in SRAM is being accessed by the chip and then sent to the thermal printhead for printing, the data for the next line B to be printed is being received by the chip and then stored in line B address space in the SRAM. When the chip finishes printing current line A data, it immediately begins to print the line B data already stored. This "ping pong" memory arrangement eliminates the burst loading of line data previously required. Next line data is always available to be printed at the end of printing the current line data.

These and other aspects, objects, features and advantages of the present invention will be more clearly understood and appreciated from a review of the following detailed description of the preferred embodiments and appended claims, and by reference to the accompanying drawings.

### Brief Description of the Drawings

Figure 1 is a block diagram of a preferred embodiment of a printhead modulation chip configured in accordance with the present invention shown with a SRAM and a thermal printhead.

Figure 2 is a schematic block diagram of the PHM2 SRAM addressing circuit.

Figures 3a-3b illustrate an example of an SRAM line data memory map.

Figure 4 illustrates a ten element thermal printhead divided into five data segments 14a-e of length two.

Figure 5 illustrates the final data sequence that is shifted into the printhead for both methods of storing data in the SRAM: bottom to top and top to bottom.

Figures 6-9 illustrate various combinations of thermal printhead and paper movement under the printhead.

Figures 10-11 illustrate the SRAM addressing scheme used with thermal printheads that have non uniform shift register segment lengths.

### Detailed Description of the Preferred Embodiments

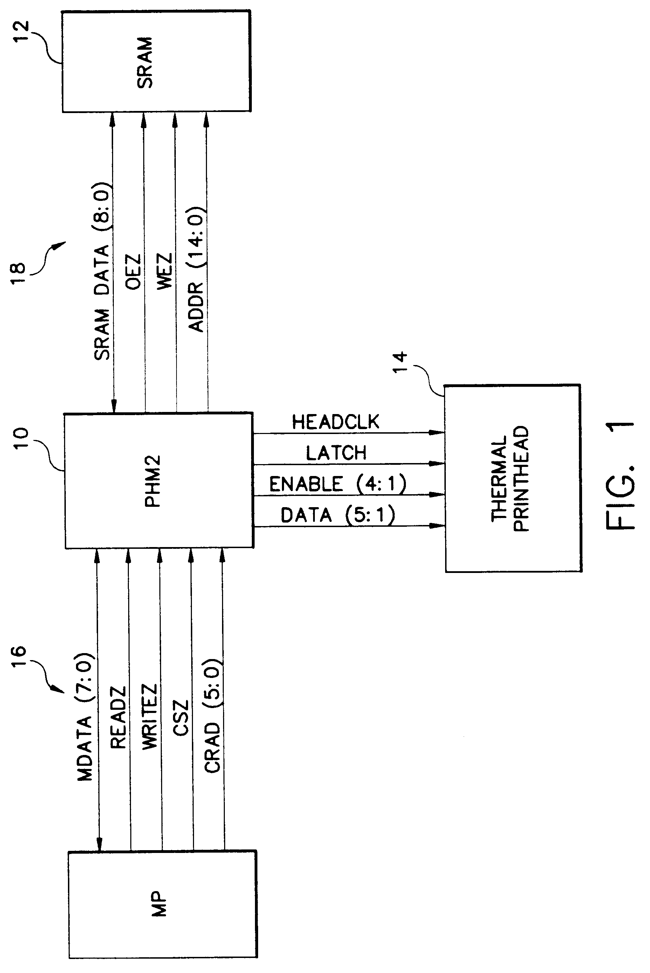

Referring to Figure 1, a printhead modulation (PHM2) chip 10 configured in accordance with the present invention is shown along with a SRAM 12 and a thermal printhead 14. The SRAM 12 is a standard 32k-bit by 9-bit SRAM. The printhead 14 is a segmented thermal printhead.

The PHM2 chip 10 receives image data and control information from a microprocessor interface 16. This interface 16 consists of an 8-bit bidirectional data bus (MDATA(7:0)), read, write and chip select lines (READZ, WRITEZ, CSZ), and some control registers address lines (CRAD(5:0)). The READ and WRITE address pointers are stored in the PHM2 via this interface 16, as is the increment/decrement bit. All other control signals required by the PHM2 chip's state machines are stored through this microprocessor interface 16.

Figure 1 also shows the PHM2/SRAM interface 18 which is the interface between the PHM2 chip 10 and the SRAM 12. It is straightforward, consisting of a bidirectional data bus (SRAMDATA (8:0), output and write enable lines (OEZ and WEZ), and a 15-bit address bus, (ADDR(14:0)).

The interface from the PHM2 chip 10 to the thermal printhead 14 consists of a clock signal (HEADCLK), a latch data signal (LATCH), enable signals (ENABLE (4:1)), and the data inputs to the printhead thermal segments (DATA(5:1)). The clock signal is used to serially shift the data bits to the appropriate locations in the thermal segments 20a-e of the printhead 14. The latch signal is used to latch the data for a line of the image into the printhead 14. The enable signals are used to turn on the segments 20a-e of thermal elements.

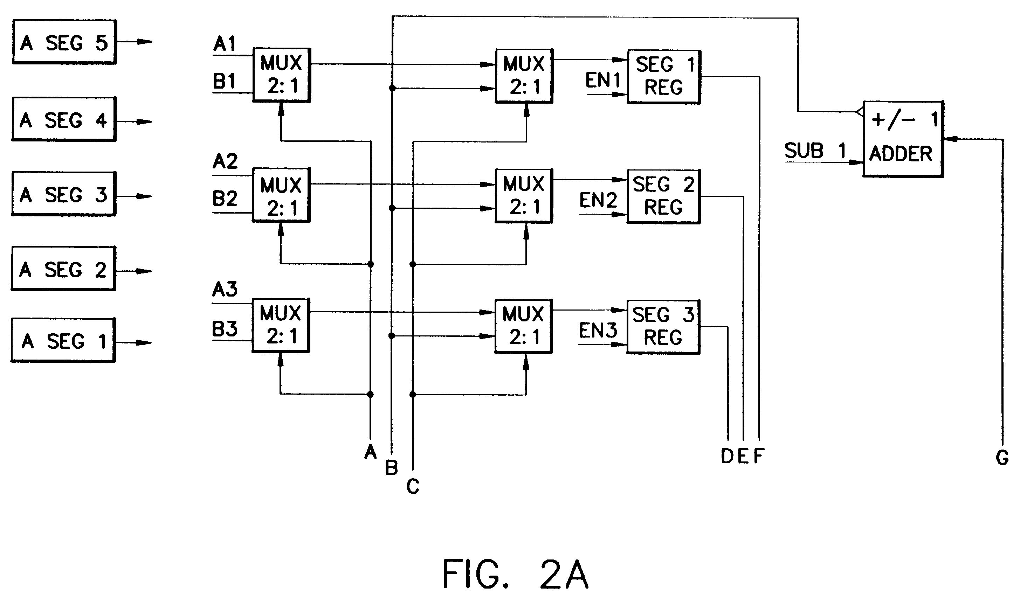

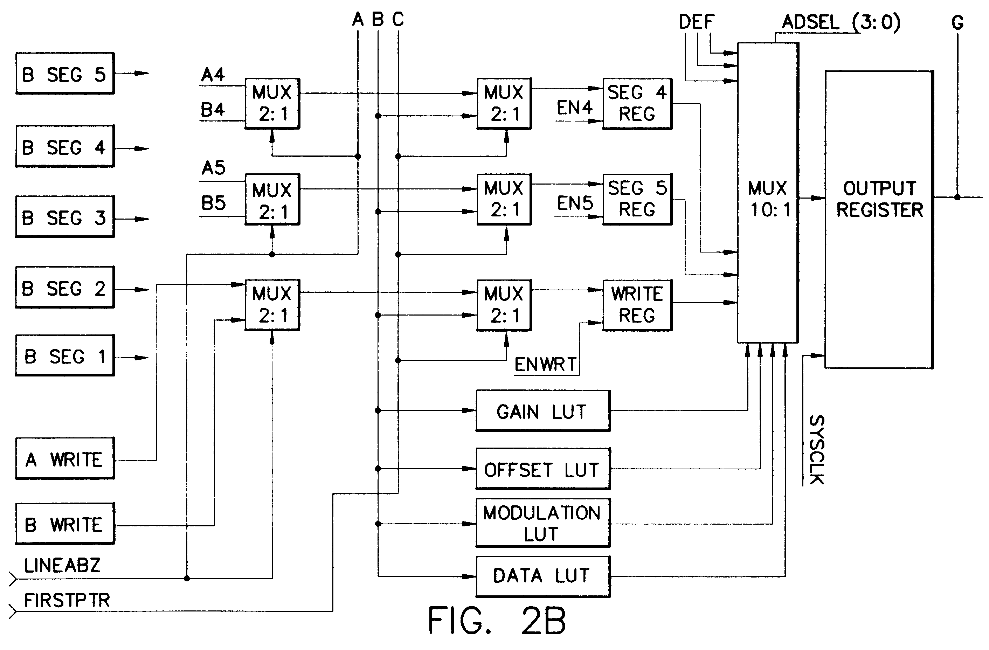

Figure 2 is a schematic block diagram of the PHM2 SRAM addressing circuit. The addressing circuitry illustrated consists of ten storage registers for the 15-bit READ pointers--five registers for line A, A1-5, and five for line B, B1-5. There are also two 15-bit wide storage registers for the WRITE pointers for lines A and B, A WRITE and B WRITE, respectively. Other address pointers exist for a GAIN look up table (LUT), Offset LUT, Modulation LUT, and DATA LUT. These pointers are required for processing the image data and for modulation.

Figure 1 also shows other inputs to the addressing circuit that are generated by the PHM2's internal logic at appropriate times to allow proper operation of the addressing circuit. One input is LINEABZ which is the current line pointer. This bit controls which line address pointer, either A or B, gets multiplexed to outputs of the PHM2 chip when reading line data. In the PHM2, when LINEABZ is low, line A initial pointers are sent to the outputs. Any next line data, in this case line B, is stored in line B address space because the WRITE register has line B pointer stored in it. LINEABZ works in conjunction with the signals FIRSTPTR, EN(5;1) and ENWRT.

FIRSTPTR is the signal used to load the "first pointers" of the current line READ addresses and next line WRITE address into the 15-bit wide storage registers. These are the registers that feed the 15-bit wide 10:1 MUX.. When this signal is active high, the initial READ and WRITE pointers are passed to the inputs for the 15-bit wide storage registers. Whether Line A or Line B initial pointers are passed depends on the state of LINEABZ. When FIRSTPTR is low, the output of the +/- 1 adder is passed to the inputs of the 15-bit wide registers.

EN (5:1) and ENWRT are the enable inputs to the 15-bit wide storage registers. When any of these signals is active high, the input to the storage register controlled by the enable is clocked to the output of the register. When the enable input to a register is low, the register outputs remain constant; that is, they hold their previous value.

ADSEL(3:0) are the four signals that are the address select lines. They are used to determine which of the ten address values is muxed to the output register.

SUB1 is an input to the +/- 1 adder block that determines whether the address value sitting on the output of the OUTPUT register is incremented or decremented by one. When SUB1 is high, the address value is decremented, when SUB1 is low, the address value is incremented. SUB1 is created by the PHM2's internal logic and is a function of the increment bit. SUB1 activates high only when a next line data value is being written to the SRAM and the stored value of the increment/decrement bit is a logic 0.

The timing of the inputs to the address generation circuitry is controlled by the PHM2'S internal logic. The basic timing sequence for reading current line data and writing next line data can be described as follows. First, the initial READ and WRITE pointers are loaded by asserting high the signals FIRSTPTR, EN(5:1) and ENWRT, Whether line A or B pointers get loaded into the 15-bit registers that feed the 10:1 MUX depends on the state of the LINEABZ current line pointer bit. Next, the ADSEL (3:0) address select lines are used to MUX the appropriate address. For example, if the PHM2 was reading the segment 4 line data, the segment 4 registers output would be muxed to the output.

When READING line data, the address pointer for a given segment is always incremented. While the segment read address is present on the OUTPUT register outputs, if the SUB1 input to the +/- 1 adder is kept low, the output of the adder will be the current read address plus one. Assert the appropriate EN(5;1) enable signal to store the (address + 1) value in the register, and the next time the PHM2 reads a data segment, the address value used will be incremented by one from the last address value used when reading that segment. FIRSTPTR must be kept low to allow storing of the address plus one value.

When writing next line data, the address value sent to the PHM2 chip outputs is stored in the WRITE register. The initial start write pointers are stored. The WRITE address stored in the WRITE register can have a value of +/- 1 from the previously used WRITE address. If the increment/decrement bit stored in the PHM2 is a logic 0, the next WRITE address stored is -1 from the current WRITE address present on the OUTPUT register outputs. The -1 decrement function is obtained by asserting the SUB1 input high to the +/- 1 ADDER whenever a WRITE register value is sitting on the OUTPUT register. The ENWRT enable line to the WRITE register is asserted high at the same time, causing the decrement WRITE address to stored. If the increment/decrement bit stored in the PHM2 is a logic 1, the next WRITE address stored is + 1 from the current WRITE address. The incrementing of the WRITE address is accomplished by keeping the SUB1 line low and the ENWRT line high whenever a WRITE register value is present on the PHM2 output pins.

The ability to increment or decrement the WRITE register address allows one to store line data in the SRAM in a "bottom to top" or "top to bottom" fashion. One simply stores the appropriate address pointers for READING, WRITING, and increment/decrement bit into the PHM2.

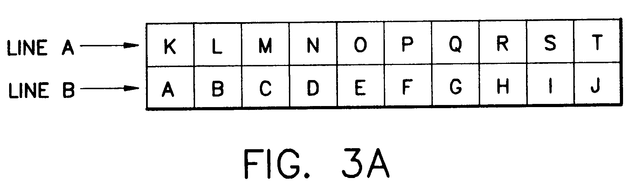

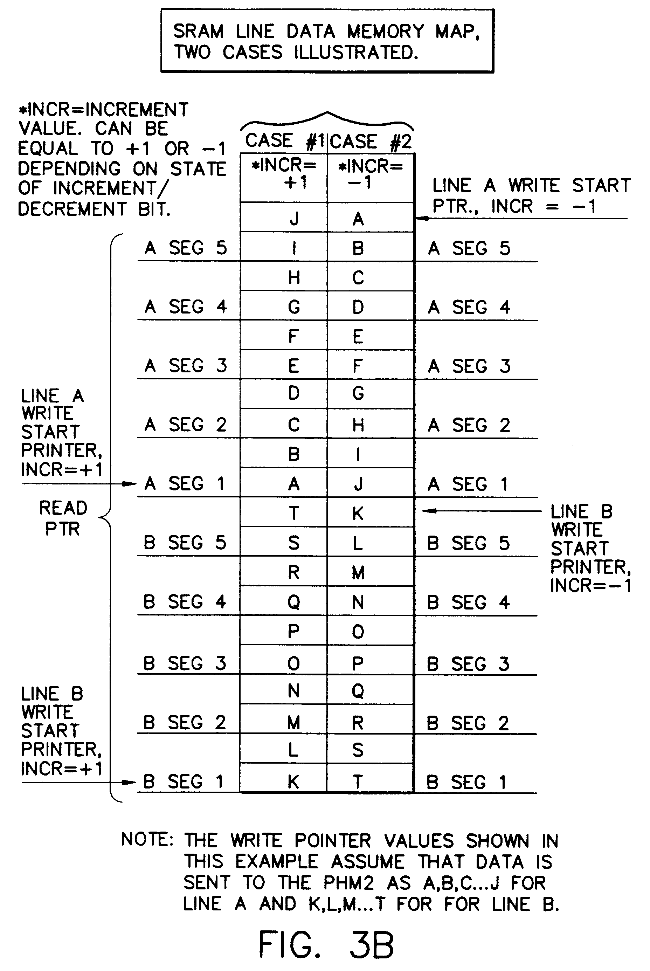

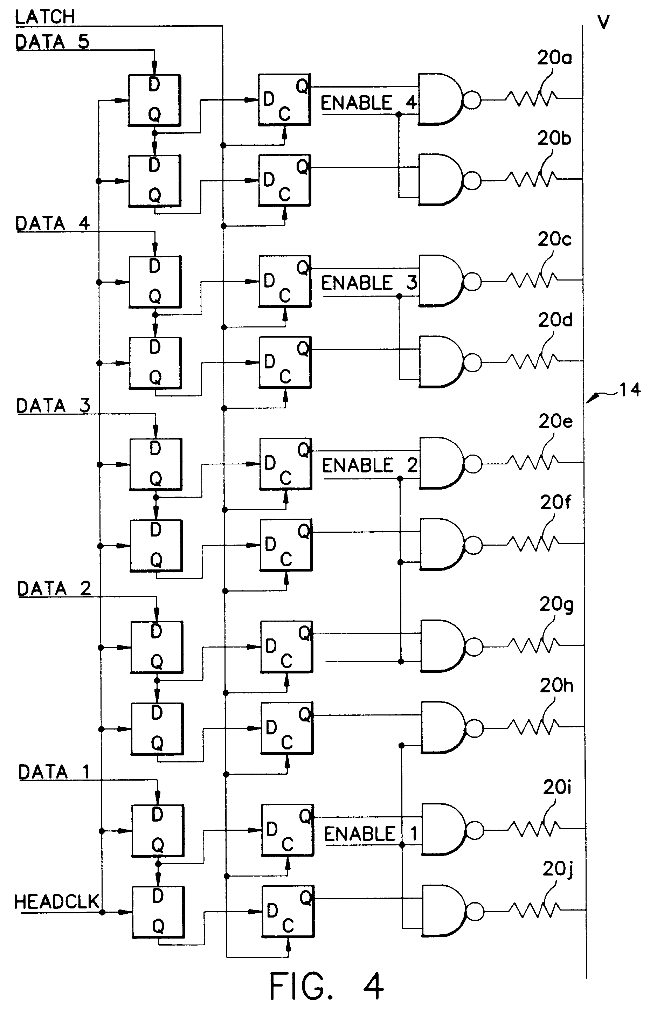

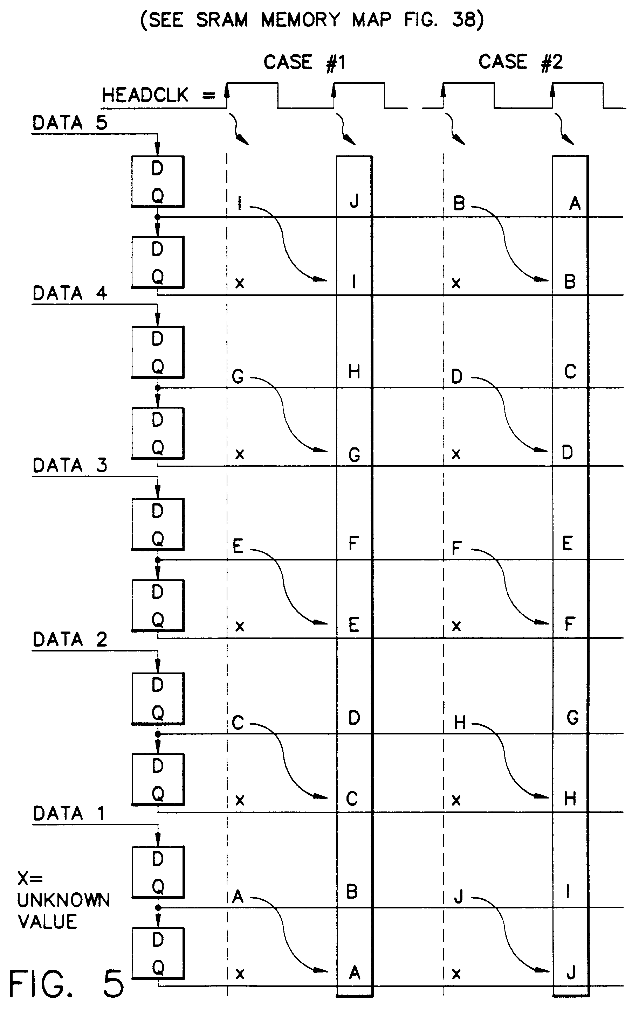

Figures 3a-3b illustrate an example of an SRAM line data memory map. Figure 3a shows an original image consisting of two lines of data, line A and line B. Each line of image data is divided into ten pixels. The letters A→J and K→T represent the pixel locations and various data valued associated with those pixel locations. In a thermal printhead system, the original line A data would be sent to the PHM2 chip in an A, B→J order or the reverse J, I→A order. The SRAM memory map shown in Figure 3b assumes the data is sent in an A, B→J order and K, L→T order for line A and line B, respectively. With the WRITE START initial pointers, the line data received by the PHM2 is stored in the SRAM in a "top to bottom" or "bottom to top" fashion, depending on the status of the increment/decrement bit (INCR = + 1 or INCR = -1).

The line data is always read out of the SRAM in an increment fashion--i.e. from bottom to top always, So, depending on how the data is stored (WRITE) to SRAM, the line data will be read out and sent to the printhead for line A data as A, B→J or J, I→A. This example assumes that the line data was sent in an A, B→J order. By reading the data out of SRAM in an A, B→J or J, I→A manner, first data in first data out to printhead or first data in last data out to printhead is obtained. If the original image line data was sent to the PHM2 chip in a J, I→A and T, S→K order, one can still store the data in SRAM top to bottom or reverse as shown in Figure 3b. All that is necessary is to change the WRITE start pointer locations and the value of the increment/decrement bit stored in the PHM2. The capability to store line data as shown in Figure 3, regardless of the order in which it is sent to the PHM2, allows a thermal printing system to print out mirror images of the original image.

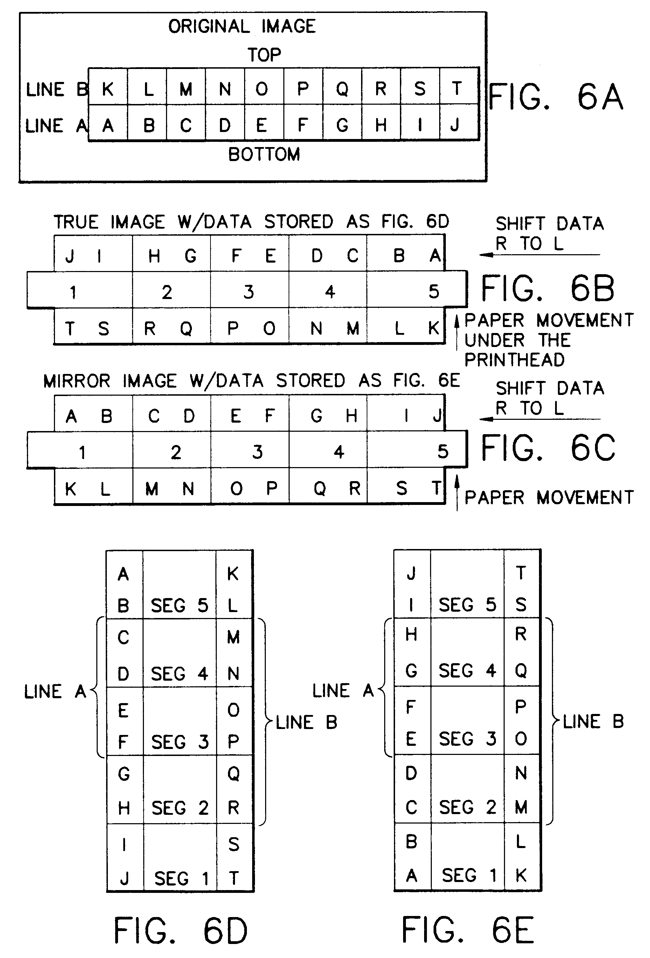

Figure 4 illustrates a 10 element thermal printhead 14 divided into five data segments of length two. The data segments are connected as shift registers of length two. The inputs to the segments are the five data lines, (DATA(5:1), from the PHM2 chip 10. The shift register segments are clocked by the PHM2 signal HEADCLK. Once the shift register segments have been loaded with the image data read from the SRAM, their outputs are latched into the transparent D-type latches, D1-5, by the PHM2 LATCH signal. A series of enable signals from the PHM2 (ENABL(4:1)) are used to enable, or allow to turn ON, the thermal elements, 20a-j, in the printhead 14. Whether or not a thermal element turns ON depends upon the data value latched for that particular thermal element.

Figure 5 illustrates the shift register segments, of the thermal printhead 14, and the final sequence of data values stored in the shift register segments if the data values for line A stored in SRAM correspond to the SRAM memory map of Figure 3b. Figure 5 shows the final sequence of data values for line A data for both manners of line storage in SRAM, i.e. top to bottom, bottom to top. The data values stored in the SRAM line segments correspond directly to a particular thermal element location in the printhead.

For example, the line A, segment 1 (20a) READ pointer location contains a data value of A or J, depending on how the line data was stored in SRAM. Looking at the line data stored when the increment/decrement bit is a logic 1, which corresponds to incrementing the WRITE address pointer (INCR = + 1), it is seen that the data value of A in the line A, segment 1 READ pointer location corresponds to the thermal printhead resistor element located at the bottom of Figure 4, or the bottom shift register element in Figure 5.

Looking now at how the line data stored in SRAM is loaded into the thermal printhead, assume the line data is stored in SRAM using an increment/decrement bit value equal to logic 1, so the data appears in SRAM as shown in the SRAM memory map when INCR = + 1.

The PHM2 chip always reads data in an increment fashion starting with the initial READ pointer address values. The example printhead described in Figures 4-5 consist of five shift register segments of length two. So, it will take two HEADCLK pulses to load the printhead shift register segments. The PHM2 will read line A data from the five segments of line A data mapped in the SRAM. The chip will read values of A for segment 1, C for segment 2, E for segment 3, G for segment 4 and I for segment 5, Depending on the binary value the letters A, C, E, G and I represent, a logic 1 or 0 will be output on the PHM2's DATA(5:1) pins. Or, more simply, the values of A, C, E, G and I are output on the PHM2 data(5:1) pins. This allows easier association of the SRAM values with a particular thermal element in the printhead.

Now that the PHM2 has placed the values A, C, E, G and I on the DATA1, DATA2, DATA3, DATA4, and DATA5 pins, respectively, the PHM2 now generates a pulse on the output pin HEADCLK. Referring to Figure 5, this first pulse of the HEADCLK shifts the values A, C, E, G and I into the first flip flop of each of the five shift register elements. The PHM2 now reads the next (incremented) address locations for the five segments of line A data mapped in the SRAM. Remember, the address generation circuit in the PHM2 stores the incremented address values for the SRAM segments after every READ of a segment in SRAM in addition to the initial READ address pointers. So, the PHM2 reads the values B, D, F, H and J and outputs those values on the DATA1, DATA2, DATA3, DATA4 and DATA5 pins respectively. A second pulse is output on the PHM2's HEADCLK pin. Now, the values A, C, E, G and I are shifted into the second flip flop of each of the five shift register segments. The values B, D, F, H and J are shifted into the first flip flop of each segment, The final sequence of data values shifted into the printhead matches the sequence of data stored in the SRAM.

Figure 5 shows the final data sequence that is shifted into the printhead for both methods of storing data in the SRAM: bottom to top and top to bottom. Being able to store SRAM data in reverse sequence allows mirror image line data to be shifted into a thermal printhead. This capability is important because it allows the PHM2 to drive thermal printheads that shift image data into their shift register segments in a right to left or left to right manner. This capability also allows the PHM2 to work with any direction of paper movement under the thermal printhead. The ability to store line data in the SRAM in mirror image format also allows the PHM2 to receive image line data from the CCD scanning electronics, or any other device, in a left to right or reverse order. For example, the original image shown in Figure 3, consisting of lines A and B, could be scanned and stored in some memory (disk drive, RAM, etc.). The line A data could be sent to the PHM2 in an A, B→J manner or the reverse J, I→A. The PHM2 can store this data in the SRAM in a manner that allows true or mirror images to be printed by the thermal printhead.

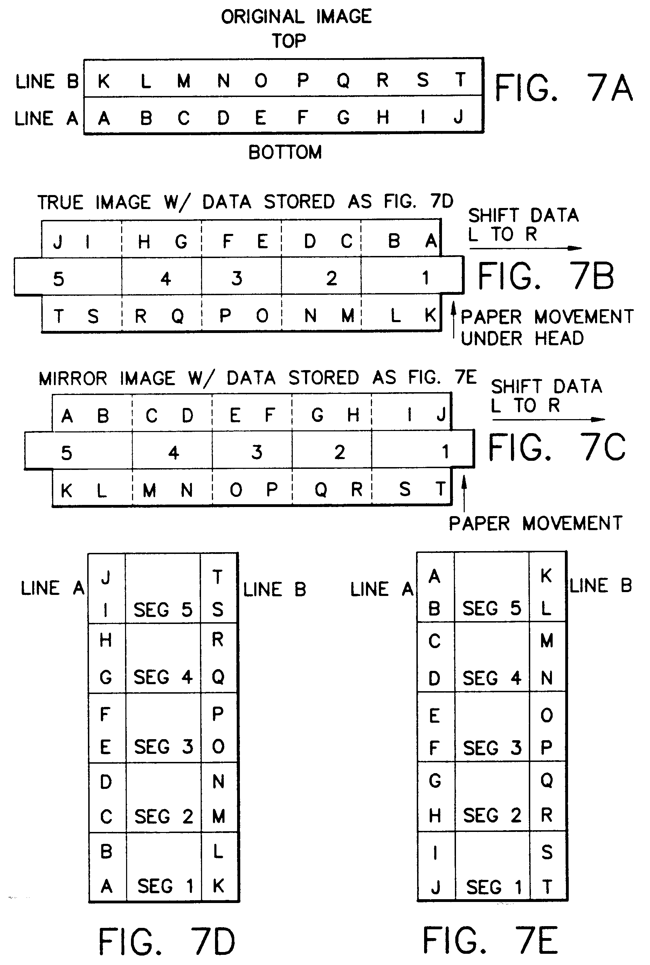

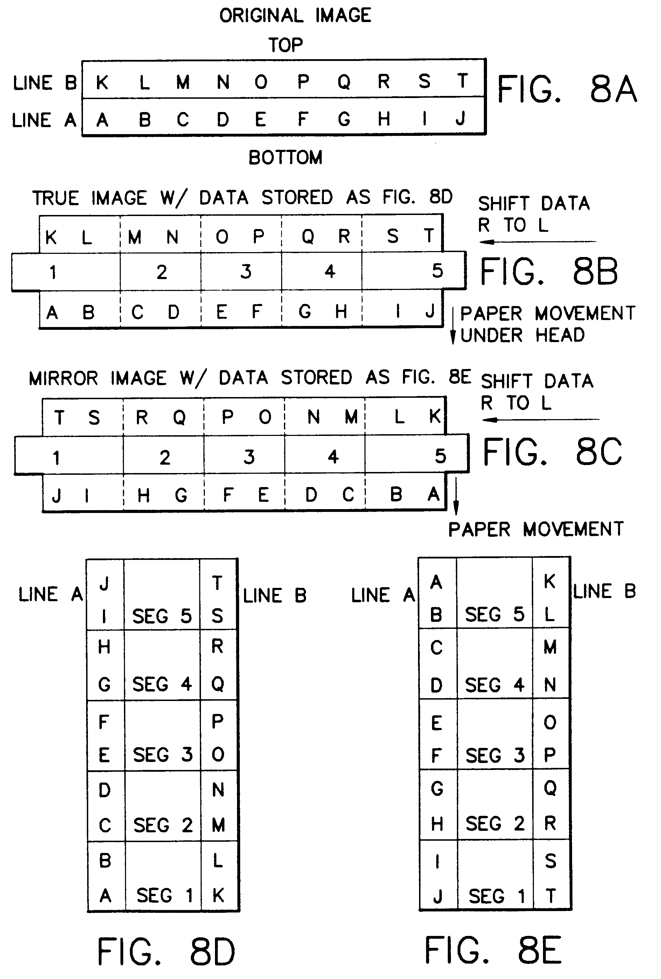

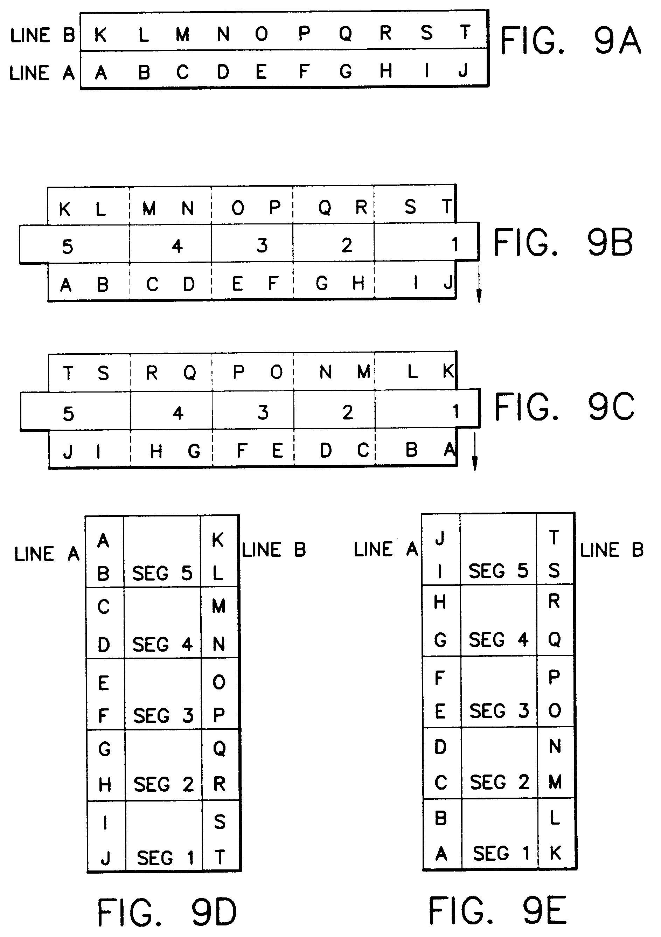

Figures 6-9 illustrate various combinations of thermal printhead and paper movement under the printhead. Depending on how the line data is stored in the SRAM, they show that true or mirror images can be printed. Any combination of printhead data shift direction and paper movement under the head can be accommodated by the PHM2 chip. Figure 6a shows the original image containing lines A and B. Figure 6b shows the thermal printhead with ten elements with five shift register segments. Figure 6b shows true image out print orientation. There is a right to left data shift with paper movement under the printhead in the direction of the arrow. With these conditions, the mirror image out is shown for image data stored as shown in Figure 6c. Figure 6c shows the image for data stored as shown in Figure 6e. Figure 6d shows data for the true orientation of Figure 6b. Figures 7a-e are similar to Figures 6a-e, but the data shift is left to right. Figures 8a-e are similar to Figures 6a-e, but the paper movement is reversed. Figures 9a-e are similar to Figures 7a-e, but the paper movement is reversed.

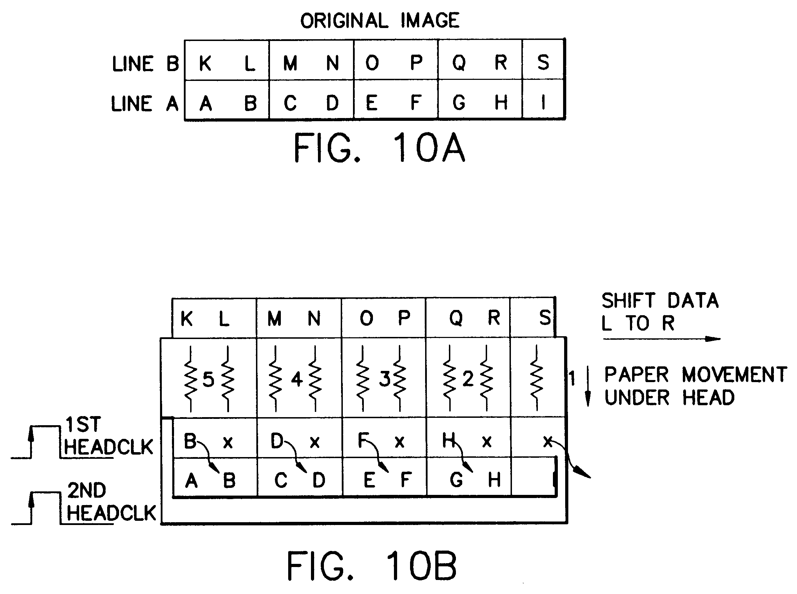

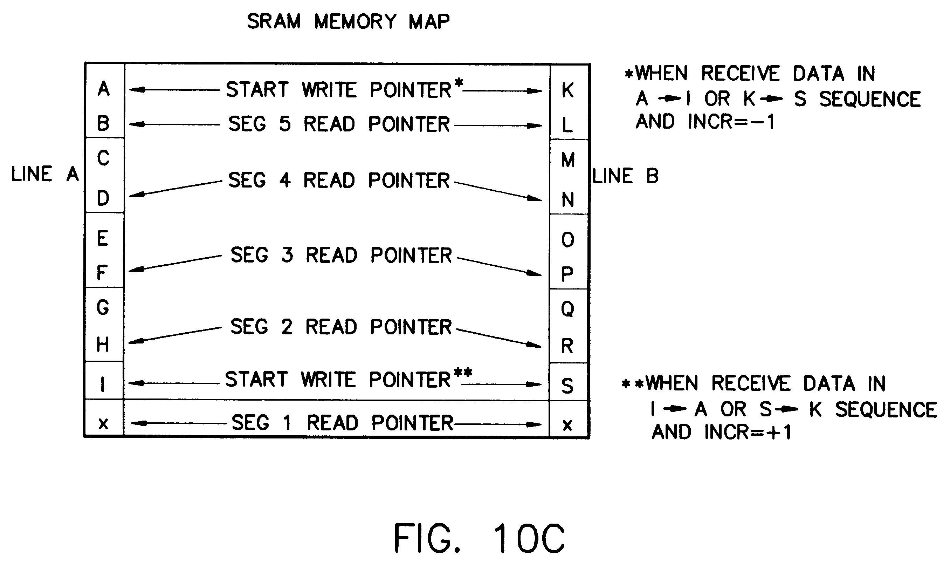

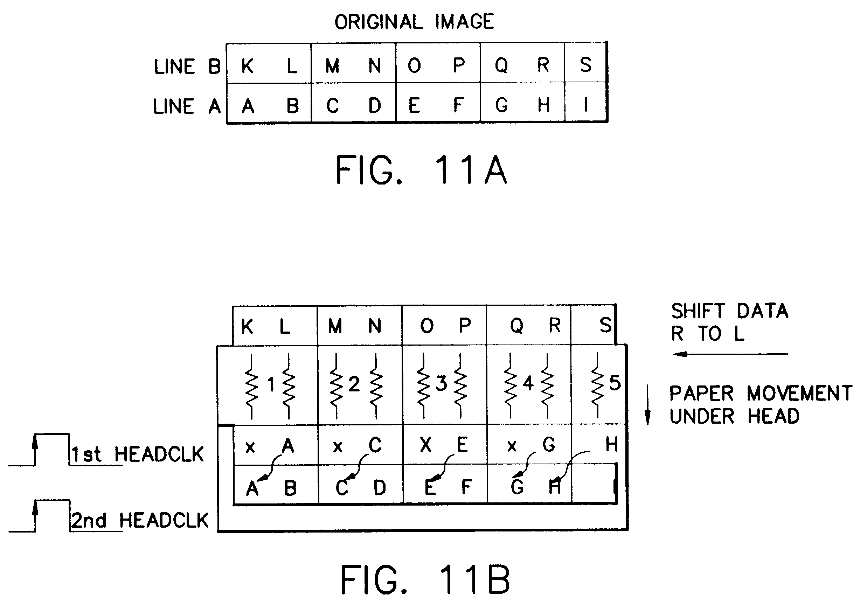

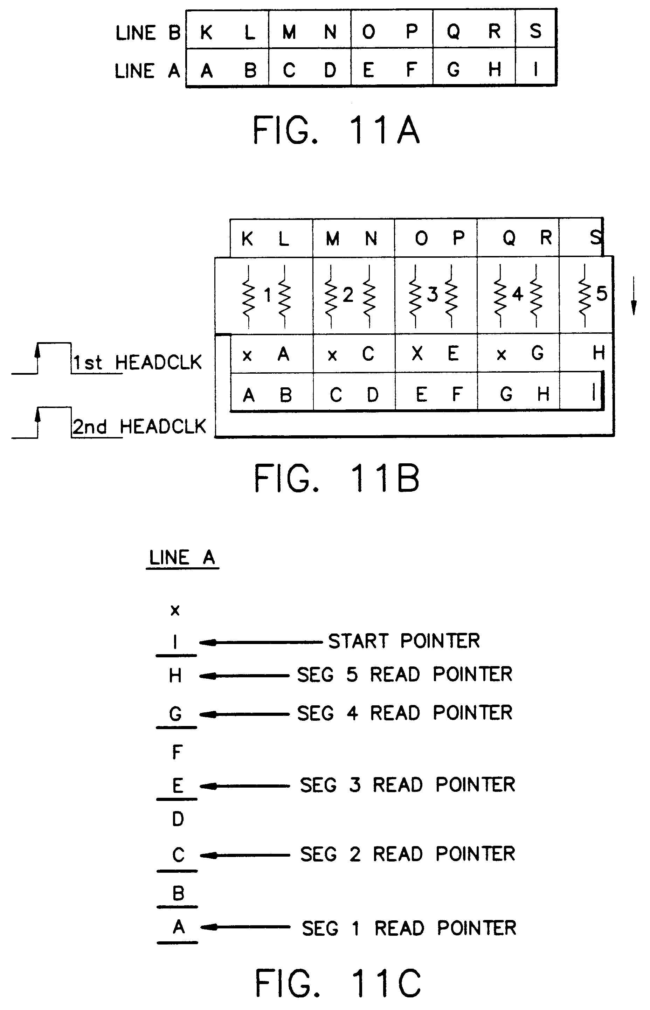

Figures 10-11 show that the SRAM addressing scheme is capable of handling thermal printheads that have non uniform shift register segment lengths. The printheads shown have four shift register segments of length two, and a fifth shift register segment of length one. The Figure 10 printhead shifts data in a left to right, L→R, manner the Figure 11 printhead shifts data in right to left, R→L, manner.

Data will be correctly shifted into the printhead if care is taken in the placement of the READ segment pointers. For the printhead of Figure 10, the segment 1 READ pointers for line A, or line B, are placed at a location in the SRAM memory map just below the last valid data location. The printhead configuration of Figure 11 requires that the segment 5 READ pointer be placed at the top of segment 4 memory space. For both printhead configurations, correctly sequenced image data is shifted into the printhead after two HEADCLK pulses.

The non-uniform length shift register segment in the printhead does not have to occur at one end or the other of the printhead. It could occur in the middle of the segments. Actually, every shift register segment in the printhead could be of different length. With a little care in the selection of the READ segment line pointers, correctly sequenced line data will always be shifted into the printhead.

It can now be appreciated that there has been described a printhead modulator chip and associated SRAM that has many advantages over the conventional pulse head modulator design. Because the PHM2 has programmable READ and WRITE address pointers, as well as the ability to store line data in the SRAM in reverse order, it can provide image data to thermal printheads that have shift register segment lengths different than 256, 512 or 577. It can provide image data to thermal printheads containing from one to five data segments. It can store line data in the SRAM in a top to bottom or bottom to top fashion regardless of the ordering sequence that line data is received by the PHM2 chip. Because line data can be stored in SRAM in a top to bottom or bottom to top manner, mirror images can be printed out. The PHM2/SRAM combination can work with any combination of thermal printhead, paper movement under the head, and data load direction to the PHM2. It can drive printheads that have different length shift register segments in them.

Because the SRAM is divided into space for two lines of image data, next line data can be received by the PHM2 and stored while current line data is being printed. When current line data printing is complete, the next line data is available for immediate printing. This ping pong memory arrangement eliminates the need to load the PHM2 only when a line of data has been printed. One can be loading next line data while current line printing is occurring.

The programmability of the READ and WRITE pointers, along with the increment/decrement bit, allows the chip to work with printheads that have thermal segment lengths different than 256, 512 or 577. The address space in SRAM reserved for either line A or line B can be subdivided into one to five sections. Each location in the SRAM address space for a line of data corresponds to a particular thermal element in the printhead. So, if a thermal printhead contained, for instance, 3 segments of thermal elements, and each segment consisted to 90 thermal elements, the SRAM address space for a line of data would be defined using three READ pointers set to values of x (where x = starting READ pointer), (x + 90) and (x + 180). Each section of SRAM address space would consist of 90 locations. The chip will read the three sections of SRAM address space and shift the appropriate image data out to the printhead's three segments of thermal elements at the appropriate times.

The chip can be programmed to divide the SRAM address space for a line of data (either A or B) from one to five sections. Because the READ pointers are programmable, the sections can be of variable length. This programmable feature allows the chip to drive thermal printheads that have segments of thermal elements that vary in length. The READ pointers for a line of data in SRAM can always be set to a value that will cause the correct data values to be read and sent to the thermal printhead in the correct sequence.

While the invention has been described with particular reference to the preferred embodiments, it will be understood by those skilled in the art that various changes may be made and equivalents may be substituted for elements of the preferred embodiment without departing from invention. In addition, many modifications may be made to adapt a particular situation and material to a teaching of the invention without departing from the essential teachings of the present invention.

Having programmable WRITE pointers for line A or B and an increment/decrement bit allows the chip to store line data in a "bottom to top" or "top to bottom" orientation in the SRAM. Reading of the sections of line data from SRAM always occurs in a "bottom to top" fashion--i.e., start at the READ segment pointers and increment up the SRAM address space. If the line data was stored in the SRAM address space in a top to bottom (i.e. decrementing from the starting WRITE pointer), the image data sent to the thermal printhead will be reversed from the order in which it was sent to the chip giving first in last out operation. This capability allows the PHM2/SRAM combination to work with any combination of CCD scanner, front end electronics, thermal printhead and paper movement under the printhead.

As is evident from the foregoing description, certain aspects of the invention are not limited to the particular details of the examples illustrated, and it is therefore contemplated that other modifications and applications will occur to those skilled the art. It is accordingly intended that the claims shall cover all such modifications and applications as do not depart from the true spirit and scope of the invention.

The invention may be summarized as providing
a thermal printer, comprising:
a printhead having a number of data segments each containing a number of thermal elements;
means for storing image data; and
a printhead modulator chip having means for receiving image data and control information.

Preferred embodiments of the invention are disclosed in the claims and also the dependent claims, which should be read as depending not only on the specified claims, but on any other claim and combination thereof. The same is true for the following summary of the invention:
The invention may be summarized as follows:
1. A thermal printer, comprising:
   a printhead having a number of data segments each containing a number of thermal elements;
   an SRAM for storing image data, said SRAM having address space reserved for a line of image data divisible into a number of sections with each location in said address space corresponding to a particular one of said thermal elements in said printhead; and
   a printhead modulator chip having means for receiving image data and control information, means for interfacing with said printhead, and means for interfacing with said SRAM, said chip receiving continuous tone image data in parallel digital form and outputting a serialized stream of image density data to said printhead.
2. A thermal printer, as set forth in 1, wherein said image data output from said chip is output in a first data in last data out manner.
3. A thermal printer, as set forth in 2, wherein said image data is output without reversing the order in which data is input to said chip.
4. A thermal printer, as set forth in 1, preprocesses said continuous tone image data and makes available a next line data while a current line data is being processed by said thermal printhead.
5. A thermal printer, as set forth in 1, wherein said SRAM is a standard SRAM.
6. A thermal printer, as set forth in 1, wherein said chip contains a SRAM addressing scheme consisting of READ segment pointers, WRITE start pointers and an increment/decrement bit.
7. A thermal printer, as set forth in 6, wherein enough address pointers can be stored in said chip to partition said SRAM address space into storage areas for two lines of image data, line A and line B.
8. A thermal printer, as set forth in 7, wherein address space for each line can be divided into as many as five data segments of variable length.
9. A thermal printer, as set forth in 7, wherein said chip contains ten address pointers dedicated for reading said SRAM with five pointers for reading line A address space and five for pointers for reading line B address space.
10. A thermal printer, as set forth in 7, where two of said address pointers are dedicated for WRITE operations to said SRAM, one for line A and one for line B.
11. A thermal printer, as set forth in 6, wherein said increment/decrement bit increments or decrements said WRITE address pointer by one when line data is written to said SRAM.
12. A thermal printer, as set forth in 6, wherein said chip contains storage registers for said READ segment pointers and WRITE start pointers.
13. A thermal printer, as set forth in 12, wherein values for said storage registers can be set to any value within the address range of said SRAM.
14. A thermal printer, as set forth in 6, wherein said READ and WRITE pointers are programmable and said chip operates with printheads that have thermal segment lengths different than 256, 512 and 577.
15. A thermal printer, as set forth in 6, wherein said chip can be programmed to divide said SRAM address space for a line of data into from one to five sections and wherein said READ pointers are programmable to thereby make said sections of variable length.
16. A thermal printer, as set forth in 6, wherein said WRITE pointers are programmable so that said SRAM stores line data in a bottom to top or top to bottom orientation.
17. A thermal printer, as set forth in 6, wherein said chip includes address pointer storage registers for partitioning of said SRAM address space into two lines of image data with each line of image data divided into from one to five sections to thereby drive a thermal printhead that contains from one to five thermal segments.
18. A thermal printer, as set forth in 1, wherein said SRAM stores image data for two lines of a complete image at a time, and, while said image data for one of said two lines stored in said SRAM is being accessed by said chip and sent to said thermal printhead for printing, said image data for the other of said two lines stands ready to be accessed by said chip.
19. A thermal printer, as set forth in 18, wherein when said chip finishes sending line data for said one of said two lines stored in said SRAM said chip immediately begins sending data to said printhead for the other one of said two lines, and sends image data for a third line of a complete image to said SRAM so that as one line is being printed another line is being readied for printing and next line data is always available to be printed.
20. A thermal printer, as set forth in 1, wherein said chip receives continuous tone image data via a microprocessor interface, said microprocessor interface including a bidirectional data bus, read, write and chip select lines, and control registers address lines.
21. A thermal printer, as set forth in 1, wherein said means for interfacing with said SRAM includes a bidirectional data bus, output and write enable lines, and an address bus.
22. A thermal printer, as set forth in 1, wherein said means for interfacing with said thermal printhead includes a clock signal, a latch data signal, enable signals, and data inputs to said printhead thermal segments.
23. A thermal printer, as set forth in 22, wherein said clock signal is used to serially shift data bits to appropriate locations in said thermal segments of said printhead.
24. A thermal printer, as set forth in 22, wherein said latch signal is used to latch data for a line of the image into said printhead.
25. A thermal printer, as set forth in 22, wherein said enable signals are used to turn on said segments of said thermal elements.
26. In a thermal printer having a printhead having a number of data segments each containing a number of thermal elements, and a standard SRAM for storing image data, said SRAM having address space reserved for a line of image data divisible into a number of sections with each location in said address space corresponding to a particular one of said thermal elements in said printhead, the improvement comprising:
   a print head modulator chip having means for receiving image data and control information, means for interfacing with said printhead, and means for interfacing with said SRAM, said chip receiving continuous tone image data in parallel digital form and outputting a serialized stream of image density data to said printhead, said chip preprocessing said continuous tone image data and making available a next line data while a current line data is being processed by said thermal printhead.
27. A thermal printer, as set forth in 26, wherein said image data output from said chip is output in a first data in last data out manner without reversing the order in which data is input to said chip.
28. A thermal printer, as set forth in 26, wherein said chip includes address pointer storage registers for partitioning of said SRAM address space into two lines of image data with each line of image data divided into from one to five sections to thereby drive a thermal printhead that contains from one to five thermal segments.
29. A thermal printer, as set forth in 26, wherein said SRAM stores image data for two lines of a complete image at a time, and, while said image data for one of said two lines stored in said SRAM is being accessed by said chip and sent to said thermal printhead for printing, said image data for the other of said two lines stands ready to be accessed by said chip.
30. A thermal printer, as set forth in 26, wherein when said chip finishes sending line data for said one of said two lines stored in said SRAM said chip immediately begins sending data to said printhead for the other one of said two lines, and sends image data for a third line of a complete image to said SRAM so that as one line is being printed another line is being readied for printing and next line data is always available to be printed.

## Claims

1. A thermal printer, comprising:
a printhead having a number of data segments each containing a number of thermal elements;
an SRAM for storing image data, said SRAM having address space reserved for a line of image data divisible into a number of sections with each location in said address space corresponding to a particular one of said thermal elements in said printhead; and
a printhead modulator chip having means for receiving image data and control information, means for interfacing with said printhead, and means for interfacing with said SRAM, said chip receiving continuous tone image data in parallel digital form and outputting a serialized stream of image density data to said printhead.

2. A thermal printer, as set forth in claim 1, wherein said image data output from said chip is output in a first data in last data out manner.

3. A thermal printer, as set forth in claim 2, wherein said image data is output without reversing the order in which data is input to said chip.

4. A thermal printer, as set forth in claim 1, preprocesses said continuous tone image data and makes available a next line data while a current line data is being processed by said thermal printhead.

5. A thermal printer, as set forth in claim 1, wherein said chip contains a SRAM addressing scheme consisting of READ segment pointers, WRITE start pointers and an increment/decrement bit.

6. A thermal printer, as set forth in claim 5, wherein enough address pointers can be stored in said chip to partition said SRAM address space into storage areas for two lines of image data, line A and line B.

7. A thermal printer, as set forth in claim 1, wherein said SRAM stores image data for two lines of a complete image at a time, and, while said image data for one of said two lines stored in said SRAM is being accessed by said chip and sent to said thermal printhead for printing, said image data for the other of said two lines stands ready to be accessed by said chip.

8. A thermal printer, as set forth in claim 7, wherein when said chip finishes sending line data for said one of said two lines stored in said SRAM said chip immediately begins sending data to said printhead for the other one of said two lines, and sends image data for a third line of a complete image to said SRAM so that as one line is being printed another line is being readied for printing and next line data is always available to be printed.

9. A thermal printer, as set forth in claim 1, wherein said chip receives continuous tone image data via a microprocessor interface, said microprocessor interface including a bidirectional data bus, read, write and chip select lines, and control registers address lines.

10. In a thermal printer having a printhead having a number of data segments each containing a number of thermal elements, and a standard SRAM for storing image data, said SRAM having address space reserved for a line of image data divisible into a number of sections with each location in said address space corresponding to a particular one of said thermal elements in said printhead, the improvement comprising:
a print head modulator chip having means for receiving image data and control information, means for interfacing with said printhead, and means for interfacing with said SRAM, said chip receiving continuous tone image data in parallel digital form and outputting a serialized stream of image density data to said printhead, said chip preprocessing said continuous tone image data and making available a next line data while a current line data is being processed by said thermal printhead.
